# EUROPÄISCHE PATENTSCHRIFT

(11) **EP 3 259 792 B1**
(45) Veröffentlichungstag und Bekanntmachung des Hinweises auf die Patenterteilung: **14.06.2023**
(21) Anmeldenummer: 16704459.3
(22) Anmeldetag: 16.02.2016
(51) Int. Cl.: B60L 3/00, B60L 50/64, B60L 58/10, H01M 50/249, H01M 50/574, H01M 50/578, H01M 50/579, H01M 50/581, H01M 10/42, H01M 10/48, H02J 7/00

(54) **BATTERIEZELLE FÜR EINE BATTERIE EINES KRAFTFAHRZEUGS, BATTERIE UND KRAFTFAHRZEUG**
BATTERY CELL FOR A BATTERY OF A MOTOR VEHICLE, BATTERY, AND MOTOR VEHICLE
ÉLÉMENT DE BATTERIE POUR UNE BATTERIE DE VÉHICULE À MOTEUR, BATTERIE ET VÉHICULE À MOTEUR CORRESPONDANTS

(30) Priorität: 18.02.2015 DE 102015002070
(43) Veröffentlichungstag der Anmeldung: 27.12.2017
(73) Patentinhaber: Audi AG, 85045 Ingolstadt (DE)
(72) Erfinder: HINTERBERGER, Michael, 85055 Ingolstadt (DE); HELLENTHAL, Berthold, 90596 Schwanstetten (DE)
(74) Vertreter: Neuhausen, Marc-Alexander
(86) Internationale Anmeldenummer: PCT/EP2016/053223
(87) Internationale Veröffentlichungsnummer: WO 2016/131802

(56) Entgegenhaltungen:
- DE-A1-102011 113 798
- DE-T5-112012 005 805
- US-A1- 2002 057 542
- US-A1- 2013 002 260
- US-A1- 2014 028 322

## Beschreibung

Die Erfindung betrifft eine Batterie für ein Kraftfahrzeug mit einer Mehrzahl von Batteriezellen. Die jeweilige Batteriezelle umfasst ein Batteriezellengehäuse, in welchem ein galvanisches Element aufgenommen ist. Über zwei elektrische Anschlüsse ist die Batteriezelle mit wenigstens einer weiteren Batteriezelle der Batterie elektrisch verbunden. Des Weiteren betrifft die Erfindung ein Kraftfahrzeug mit einer Batterie.

Die DE 10 2011 113798 A1 beschreibt eine modulare Batterie, welche aus einer Serien- und Parallelschaltung von Batteriemodulen besteht. Hierbei werden eine oder mehrere Einzelzellen zu dem Batteriemodul zusammengeschaltet. Jeweils ein Batterie-Modul, ein zugehöriges Schaltmodul und ein lokales Batteriemanagement-Modul werden zu einer Einheit in eigenem Gehäuse zusammengefasst.

Aus dem Stand der Technik etwa der DE 10 2010 045 037 A1 ist es bekannt, eine Mehrzahl von Batteriezellen zum Bereitstellen einer bestimmten Spannung beziehungsweise eines bestimmten Stroms zu einer Batterie zusammenzuschalten. Solche Batterien werden heutzutage insbesondere als Traktionsbatterien in Kraftfahrzeugen wie etwa Elektrofahrzeugen oder Hybridfahrzeugen zum Bereitstellen von elektrischer Antriebsenergie eingesetzt.

Bei derartigen Batteriezellen kann eine sogenannte Stromunterbrechungsvorrichtung (CID, Current Interrupt Device) vorgesehen sein. Eine solche Stromunterbrechungsvorrichtung ist dazu vorgesehen, bei einem zu großen externen Stromfluss, also bei einem äußeren Kurzschluss und zusätzlich oder alternativ bei erhöhtem Innendruck im Batteriezellengehäuse einmalig auszulösen. In der Folge wird der Stromfluss durch die Batteriezelle unterbunden, sodass es auch zu keiner weiteren Erwärmung der Batteriezelle kommt. Dadurch können auch keine weiteren chemischen Reaktionen angefacht oder verstärkt werden, und ein sogenanntes thermisches Durchgehen ("thermal runaway") der Batteriezelle ist vermieden. Zugleich ist dann jedoch die Funktion der Batteriezelle, nämlich das Abgeben oder Aufnehmen von elektrischem Strom, nicht mehr gegeben.

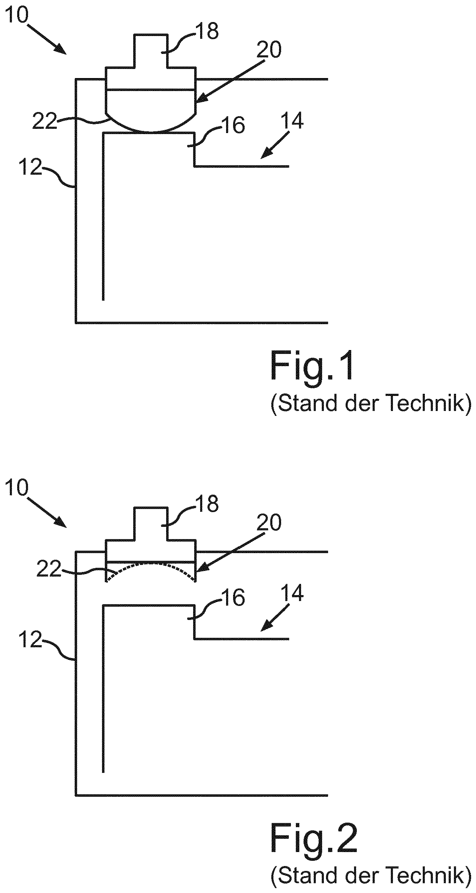

Bei handelsüblichen Batteriezellen, wie sie für Traktionsbatterien von Kraftfahrzeugen zum Einsatz kommen, kann eine Stromunterbrechungsvorrichtung vorgesehen sein, welche anhand von Fig. 1 veranschaulicht werden soll. Von einer schematisch dargestellten Batteriezelle 10 ist hierbei ein Batteriezellengehäuse 12 teilweise gezeigt, in welchem ein galvanisches Element 14 angeordnet ist. Zwischen einem Ableiter 16 des galvanischen Elements 14 und einem elektrischen Anschluss 18 der Batteriezelle 10 ist die Stromunterbrechungsvorrichtung 20 angeordnet, welche bei der Batteriezelle 10 ein infolge von äußeren Einflüssen verformbares Metallblatt 22 umfasst. Das Metallblatt 22 funktioniert entsprechend einem Bimetallelement, dessen Verformung von der Temperatur abhängt. Im Ausgangszustand liegt das mit dem Anschluss 18 verbundene Metallblatt 22 auch am Ableiter 16 an, wie dies in Fig. 1 gezeigt ist. Bei einer Temperaturerhöhung oder bei einem Anstieg des Drucks innerhalb des Batteriezellengehäuses 12, etwa infolge einer Gasentwicklung, wölbt sich jedoch das Metallblatt 22 auf.

Dies ist in Fig. 2 veranschaulicht. Dadurch wird eine elektrisch leitende Verbindung zwischen dem Ableiter 16 und dem elektrischen Anschluss 18 unterbrochen. Der Ableiter 16 ist Teil einer Elektrode des galvanischen Elements 14, welche zusätzlich zu dem Ableiter 16 das (nicht gezeigte) chemisch aktive Material der Elektrode umfasst.

Des Weiteren beschreibt die EP 2 306 485 A1 eine Batteriezelle mit einer Stromunterbrechungsvorrichtung, welche als Schmelzsicherung ausgebildet ist. Durch das Aufschmelzen beispielsweise eines Zinkmaterials wird hier ein Kontakt zwischen einem Ableiter eines galvanischen Elements und einem elektrischen Anschluss oder Pol der Batteriezelle dauerhaft unterbrochen.

Als nachteilig ist bei derartigen Batteriezellen der Umstand anzusehen, dass solche Stromunterbrechungsvorrichtungen vergleichsweise teure Bauteile sind. Zudem müssen bei der Konzeption derartiger Stromunterbrechungsvorrichtungen eine Reihe von Kompromissen eingegangen werden. Die Auslösefunktion ist nämlich mit der einer elektrischen Sicherung vergleichbar. Entsprechend spielen der Druck, die Temperatur und die Stromstärke sowie die Zeitdauer, über welche hinweg hohe derartige Größen vorliegen, eine große Rolle hinsichtlich des Auslöseverhaltens. Infolge dessen überlagern sich entsprechende Kennlinien dieser Parameter, und es können Hysteresen auftreten. Dies führt dazu, dass ein exakter Auslöseschwellenwert nur schwer vorgegeben werden kann. Es ist nämlich schwierig, das Zusammenspiel der unterschiedlichen Faktoren möglichst weitgehend zu berücksichtigen. Des Weiteren ist es sehr mühselig, für jeden Batteriezelltyp eine geeignete Abstimmung im Hinblick auf diese Faktoren vorzunehmen.

Des Weiteren kann eine solche mechanische Stromunterbrechungsvorrichtung nur einmal auslösen. Mit anderen Worten kann die Stromunterbrechungsvorrichtung nach einer Auslösung nicht wieder zurückgesetzt werden, die Stromunterbrechung ist also irreversibel. Zudem erfordert ein solches mechanisches Bauteil eine große Präzision bei der Herstellung der Batteriezelle, damit die Stromunterbrechungsvorrichtung ihre gewünschte Funktion erfüllen kann.

Bei einer Batteriezelle mit Stromunterbrechungsvorrichtung, welche auch bei ansteigendem Innendruck im Batteriezellengehäuse auslöst, werden außerdem in der Regel sogenannte Überladeadditive eingesetzt. Solche Additive führen beim Überladen der Batteriezelle zum Freisetzen von Gasen und so zu einem Erhöhen des Innendrucks. Jedoch ist das Einbringen solcher Überladeadditive in die Batteriezelle nicht erwünscht, da ein Ansteigen des Innendrucks im Batteriezellengehäuse möglichst weitgehend vermieden werden sollte. Überladeadditive führen des Weiteren zu einem langsamen, stetigen Ansteigen des Drucks im Inneren des Batteriezellengehäuses. Dadurch kann es im Laufe der Zeit und insbesondere in einem nicht vorhersagbaren Zeitpunkt zu einem unerwünschten Auslösen der Stromunterbrechungsvorrichtung kommen.

Es gibt daher auch Batteriezellen ohne Stromunterbrechungsvorrichtung, welche nicht gasende Überladeadditive enthalten, um nicht beim Überladen den Zellinnendruck unnötig zu steigern. Stromunterbrechungsvorrichtungen und deren Vorteile und Nachteile werden daher heftig und kontrovers diskutiert. Es wird nämlich einerseits gewünscht, dass die Stromunterbrechungsvorrichtung der Batteriezelle möglichst zuverlässig und robust ist. Andererseits soll aber die Stromunterbrechungsvorrichtung möglichst sensibel hinsichtlich Auslösung sein.

Aufgabe der vorliegenden Erfindung ist es, eine Batterie und ein Kraftfahrzeug der eingangs genannten Art zu schaffen, welche oder welches im Hinblick auf die Stromunterbrechung in der Batteriezelle verbessert ist.

Diese Aufgabe wird durch eine Batterie mit den Merkmalen des Patentanspruchs 1 und durch ein Kraftfahrzeug mit den Merkmalen des Patentanspruchs 6 gelöst. Vorteilhafte Ausgestaltungen mit zweckmäßigen Weiterbildungen der Erfindung sind in den abhängigen Patentansprüchen angegeben.

Die erfindungsgemäße Batterie umfasst eine Mehrzahl von Batteriezellen, welche in Reihe geschaltet und/oder parallel geschaltet sind.

Die Batteriezelle umfasst wenigstens ein Schaltelement, welches mittels einer Steuereinheit in einen Schaltzustand überführt werden kann, in welchem eine elektrisch leitende Verbindung zwischen einem Ableiter des galvanischen Elements und zumindest einem der elektrischen Anschlüsse unterbrochen ist. Durch das Vorsehen der Steuereinheit, mittels welcher durch Ansteuern des Schaltelements das Schaltelement in den geöffneten Schaltzustand überführbar ist, ist eine intelligente Batteriezelle bereitgestellt, also eine sogenannte "SmartCell". Mittels der Steuereinheit lassen sich nämlich besonders einfach Kriterien vorgeben, bei deren Erfülltsein das wenigstens eine Schaltelement so geschaltet wird, dass die elektrisch leitende Verbindung unterbrochen ist. Es lässt sich also mittels Intelligenz eine exakte Auslösung des Schaltelements vorgeben oder programmieren. Entsprechend ist die Batteriezelle insbesondere im Hinblick auf eine Stromunterbrechung verbessert.

Die Steuereinheit ist innerhalb des Batteriezellengehäuses angeordnet. Dadurch ist die Steuereinheit gut geschützt. Des Weiteren können der Steuereinheit so besonders gut Signale von Sensoren zugeführt werden, welche Parameter der Batteriezelle erfassen und sich hierfür ebenfalls innerhalb des Batteriezellengehäuses befinden.

Als vorteilhaft hat es sich gezeigt, dass mittels zumindest eines mit der Steuereinheit gekoppelten Sensors oder mittels der Steuereinheit selber eine Spannung und/oder ein Druck und/oder mechanische Spannungen und/oder eine Beschaffenheit eines Elektrolyten des galvanischen Elements und/oder eine Beschleunigung erfasst werden kann, wobei die Steuereinheit dazu ausgelegt ist, in Abhängigkeit von wenigstens einem solchen Parameter das wenigstens eine Schaltelement zu öffnen.

So kann beispielsweise beim Überschreiten von einem Schwellenwert eines derartigen Parameters oder von Schwellenwerten derartiger Parameter die elektrisch leitende Verbindung zwischen dem Ableiter und dem elektrischen Anschluss unterbrochen werden. Auf diese Weise kann insbesondere dafür gesorgt werden, dass eine fehlerhafte Batteriezelle von einem Batteriezellenverbund der Batterie galvanisch getrennt wird.

Insbesondere kann ein Überladungsschutz bereitgestellt werden, wenn etwa beim Überschreiten eines Höchstwerts der Temperatur, der Stromstärke oder der Spannung die Batteriezelle abgeschaltet oder freigeschaltet wird. Auch kann ein solches Selbstauslösen der Batteriezelle nach Art einer Schmelzsicherung beim Überschreiten von Höchstwerten etwa der Temperatur, der Stromstärke, des Drucks oder dergleichen realisiert werden.

Der Sicherheit der Batteriezelle ist es des Weiteren zuträglich, wenn in Abhängigkeit von der Beschleunigung das wenigstens eine Schaltelement derart geschaltet wird, dass die elektrisch leitende Verbindung unterbrochen ist. So kann bei einem mit der Batterie ausgestatteten Kraftfahrzeug etwa im Fall eines Aufpralls für ein Spannungsfrei-Schalten der Batteriezelle gesorgt werden.

Es lassen sich also abhängig von den mittels des wenigstens einen Sensors oder mittels der Steuereinheit erfassten Daten besonders viele Auslösekriterien für eine sichere Auslösung der Stromunterbrechung berücksichtigen.

Hierbei können die entsprechenden Sensoren die genannten Parameter innerhalb des Batteriezellengehäuses erfassen. Zusätzlich oder alternativ können Sensoren vorgesehen sein, welche die außerhalb des Batteriezellengehäuses vorliegenden Bedingungen anhand des wenigstens einen Parameters erfassen. Durch die Berücksichtigung einer Vielzahl von die Bedingungen innerhalb und/oder außerhalb des Batteriezellengehäuses beschreibenden Parametern lassen sich sehr gut auf die jeweilige Situation abgestimmte Auslösekriterien vorgeben, sodass stets ein sicheres Unterbrechen der elektrisch leitenden Verbindung gewährleistet werden kann. Es ist somit eine besonders sichere intelligente Batteriezelle ("Safe SmartCell") geschaffen. Die entsprechenden Auslösekriterien sind in Kennlinien oder Kennlinienfeldem abgelegt, und zwar in einem Speicherbaustein der Steuereinheit. Durch eine Änderung der Kennlinien oder Kennlinienfelder kann insbesondere der Alterung der Batteriezelle Rechnung getragen werden.

Die Steuereinheit weist eine Schnittstelle auf, über welche ein Schwellenwert des wenigstens einen Parameters veränderbar ist, bei dessen Überschreiten das wenigstens eine Schaltelement in den Schaltzustand überführt wird. So können die Auslösekriterien durch Modifizieren der Kennlinien oder Kennlinienfelder angepasst werden. So kann Veränderungen der Batteriezelle über die Lebensdauer der Batteriezelle hinweg Rechnung getragen werden. Die Auslösekriterien sind also nicht einmal vorgegeben und somit statisch, sondern dynamisch an sich verändernde Gegebenheiten anpassbar. Dies macht das Auslösen der Stromunterbrechung besonders flexibel. Eine Anpassung der Auslösekriterien kann zwar auch durch ein Austauschen der Steuereinheit erreicht werden, jedoch ist es deutlich weniger aufwendig, derartige Veränderungen über die Schnittstelle der Steuereinheit vorzunehmen.

Weiterhin ist eine Mehrfachauslösung des Schaltelements möglich. Das Schaltelement lässt sich nämlich mittels der Steuereinheit wieder in einen weiteren Schaltzustand überführen, in welchem die elektrisch leitende Verbindung zwischen dem Ableiter und dem zumindest einen elektrischen Anschluss der Batteriezelle wieder hergestellt ist. Das Unterbrechen der elektrisch leitenden Verbindung ist daher reversibel, sodass sich das Schaltelement für ein erneutes Auslösen reaktivieren lässt.

Die Steuereinheit ermöglicht es des Weiteren, die Entwicklung neuer Generationen von Batteriezellen oder Modifikationen von Batteriezellen zu berücksichtigen, indem an derartige Batteriezellen angepasste Auslösekriterien durch eine entsprechende Programmierung der Steuereinheit festgelegt werden. So lässt sich das Unterbrechen der elektrisch leitenden Verbindung besonders einfach an neue Gegebenheiten anpassen, und zwar sowohl bereits bei der Herstellung der Batteriezelle als auch nachträglich bei deren Einsatz, etwa in einer Batterie eines Kraftfahrzeugs.

Es kann auch vorgesehen sein, zwischen jedem der beiden Ableiter des galvanischen Elements und dem jeweiligen elektrischen Anschluss ein mittels der Steuereinheit schaltbares Schaltelement vorzusehen. So lässt sich eine besonders sichere Trennung der Batteriezelle von weiteren Batteriezellen der Batterie erreichen.

Es ist möglich, das Schaltelement als Relais auszubilden. Dann lässt sich eine besonders sichere galvanische Trennung erreichen. Jedoch beansprucht ein solches mechanisch arbeitendes Bauteil vergleichsweise viel Bauraum innerhalb der Batteriezelle. Bevorzugt ist daher das wenigstens eine Schaltelement als Halbleiterelement ausgebildet. Ein solches Halbleiterelement lässt sich besonders einfach und rasch in den gewünschten Schaltzustand überführen, wobei der hierfür seitens der Steuereinheit bestehende Energiebedarf äußerst gering ist. Des Weiteren kann eine Kombination eines Relais mit einem Halbleiterelement vorgesehen sein, um sowohl besonders rasch als auch besonders sicher die elektrisch leitende Verbindung unterbrechen zu können.

Um die vorteilhaften Eigenschaften eines Halbleiterelements bereitzustellen, kann als Schaltelement beispielsweise ein Leistungstrennschalter mit Reverse-Diode, etwa ein Feldeffekttransistor, insbesondere ein MOSFET (metaloxide-semiconductor field-effect transistor, Metall-Oxid-Halbleiter-Feldeffekttransistor), bevorzugt ein Leistungs-MOSFET, eingesetzt werden. Auch kann auf der Strecke zwischen dem Ableiter und zumindest einem der elektrischen Anschlüsse als Schaltelement ein elektronisches Relais mit zwei Feldeffekttransistoren (insbesondere mit zwei MOSFETs) vorgesehen sein, welche antiseriell geschaltet sind, bei welchen also die elektrisch hintereinander geschalteten Feldeffekttransistoren Reverse-Dioden mit entgegengesetzter Durchlassrichtung aufweisen. So kann besonders sicher das Unterbrechen der elektrisch leitenden Verbindung gewährleistet werden. Zusätzlich oder alternativ kann das wenigstens eine Schaltelement als Galliumnitrid-Schalter (GaN-Schalter) oder dergleichen Schaltelement mit einem derartigen Material mit einer breiten Bandlücke, etwa in Form von Siliziumkarbid (SiC) ausgebildet sein.

Derartige Halbleiterelemente bringen erhebliche Vorteile im Hinblick auf die elektrischen Eigenschaften mit sich, insbesondere im Hinblick auf die große Stromdichte oder Leistungsdichte, welche pro Halbleiterelement erreichbar ist. Zudem lässt sich so ein besonders kompaktes Schaltelement bereitstellen. Das Schaltelement lässt darüber hinaus besonders hohe Schaltgeschwindigkeiten, insbesondere Abschaltgeschwindigkeiten, beispielsweise von einigen hundert kHz (und mehr) zu. Die Stromunterbrechung kann also besonders rasch erfolgen. Auch lassen derartige Halbleiterschalter besonders hohe Betriebstemperaturen von bis zu 250 Grad Celsius zu, ohne dass es zu einer irreversiblen Schädigung des Schaltelements kommt. Darüber hinaus lassen sich mit den genannten Halbleiterelementen besonders niedrige Durchlasswiderstände realisieren, welche mit wünschenswert geringen Schaltverlusten einhergehen.

Insbesondere kann das wenigstens eine Schaltelement als sogenannter Gate Injection Transistor (GIT) ausgelegt werden, etwa als ein GaN-Transistor selbstsperrenden Typs. Ein solcher GaN-Transistor weist nämlich die oben genannten vorteilhaften Eigenschaften in besonders hohem Maße auf. Ein solches Schaltelement lässt ohne Steuerspannung am Gate-Anschluss keinen Strom hindurch. Es befindet sich ohne Steuerspannung also im AusZustand, in welchem die elektrisch leitende Verbindung unterbrochen ist. Dies ist aus Sicherheitsgründen vorteilhaft.

Es kann das Halbleiterelement, etwa der Leistungstransistor, derart ausgebildet sein, dass es lediglich zwei Schaltzustände aufweist, nämlich einen Schaltzustand, in welchem die elektrisch leitende Verbindung unterbrochen ist und einen weiteren Schaltzustand, in welchem die elektrisch leitende Verbindung zwischen dem Ableiter und dem elektrischen Anschluss hergestellt ist. Dies macht die Auslegung des Halbleiterelements einfach und das Schalten desselben besonders sicher.

Als weiter vorteilhaft hat es sich gezeigt, wenn mittels der Steuereinheit wenigstens ein Parameter aus einer Gruppe erfassbar ist, welcher eine Stromstärke eines durch die Batteriezelle fließenden Stroms umfasst. Hierbei ist die Steuereinheit dazu ausgebildet, in Abhängigkeit von dem wenigstens einen Parameter das wenigstens eine Schaltelement in den Schaltzustand zu überführen, in welchem die elektrisch leitende Verbindung zwischen dem Ableiter des galvanischen Elements und dem zumindest einen elektrischen Anschluss unterbrochen ist.

So kann beispielsweise sichergestellt werden, dass bei hohen Kurzschlussströmen, etwa Strömen einer Stromstärke von 2 kA bis 4 kA, eine sichere, insbesondere mehrfache Trennung des galvanischen Elements von den Anschlüssen oder Batteriepolen und somit ein Abschalten der Batteriezelle erfolgt.

Zusätzlich oder alternativ kann etwa mittels zumindest eines mit der Steuereinheit gekoppelten Sensors beispielsweise eine Temperatur als der wenigstens eine Parameter erfasst werden. So kann etwa beim Überschreiten eines Schwellenwerts der Temperatur das wenigstens eine Schaltelement in den Schaltzustand überführt werden, in welchem die elektrisch leitende Verbindung unterbrochen ist. So kann insbesondere bei einem Kurzschluss oder vor einem thermischen Durchgehen (thermal runaway) die Batteriezelle sicher abgeschaltet werden.

Auch bei einer Temperaturbelastung von außerhalb der Batteriezelle, also bei einer Wärmebeaufschlagung, welche nicht durch Vorgänge innerhalb der Batteriezelle bewirkt ist, kann die Steuereinheit zur Sicherheit das Schaltelement ansteuern und die elektrisch leitende Verbindung unterbrechen. Dies kann beispielsweise der Fall sein, wenn es infolge eines Brands einer weiteren Batteriezelle oder anderer Komponenten der Batterie (oder einer an die Batterie angrenzenden Komponente) zu einem Wärmeeintrag in die Batteriezelle kommt.

Informationen über derartige, in der Batteriezelle auftretende oder aus der Umgebung der Batteriezelle auf die Batteriezelle einwirkende Wärmebelastungen können bevorzugt mittels der Steuereinheit kommuniziert werden, etwa an eine übergeordnete Steuerungseinrichtung der Batterie. Zusätzlich oder alternativ können derartige Informationen in einem Speicher der Steuereinheit abgelegt und bei Bedarf ausgelesen werden.

Als weiter vorteilhaft hat es sich gezeigt, wenn die Steuereinheit zum Übermitteln von Informationen an eine übergeordnete Steuerungseinrichtung der Batterie und/oder zum Empfangen eines von der übergeordneten Steuerungseinrichtung ausgegebenen Befehls ausgelegt ist. Hierfür kann insbesondere die Schnittstelle der Steuereinheit genutzt werden.

Hierbei kann eine leitungsgebundene und/oder drahtlose Kommunikation vorgesehen sein. So können ein Fehler und/oder ein jeweiliger Schaltzustand des Schaltelements der übergeordneten Steuerungseinrichtung, etwa einem Batteriemanagementsystem, mitgeteilt werden. Zudem kann die übergeordnete Steuerungseinrichtung Befehle an die Steuereinheit der Batteriezelle ausgeben. So kann insbesondere im Hinblick auf den Zustand der gesamten Batterie hin das Unterbrechen der elektrisch leitenden Verbindung durch die Steuereinheit bewirkt werden, welche das Schaltelement ansteuert.

Die Steuereinheit, welche zur Kommunikation mit der übergeordneten Steuerungseinrichtung der Batterie ausgebildet ist, ermöglicht des Weiteren einen Datenaustausch der miteinander vernetzten Batteriezellen. So kann beispielsweise eine Mehrzahl von Batteriezellen, insbesondere alle Batteriezellen, bei welchen Auslösekriterien erfüllt sind, beispielsweise aus Sicherheitsgründen deaktiviert werden. Entsprechend wird dann bei den jeweiligen Batteriezellen das Schaltelement in den Schaltzustand überführt, in welchem die elektrisch leitende Verbindung zwischen dem Ableiter und dem elektrischen Anschluss unterbrochen ist.

Von Vorteil ist es weiterhin, wenn zum Versorgen der Steuereinheit mit elektrischer Energie die Steuereinheit mit dem galvanischen Element gekoppelt ist. Dann bezieht nämlich die Steuereinheit die zum Schalten des Schaltelements notwendige elektrische Energie direkt aus der Batteriezelle. Dies ist im Hinblick auf die von der Batteriezelle bereitgestellte elektrische Energie jedoch unproblematisch, da die Steuereinheit mit einer sehr geringen Energiemenge auskommt, also bevorzugt eine Low-Power-Ausführung, insbesondere eine Ultra-Low-Power-Ausführung ist.

Zusätzlich oder alternativ kann die Steuereinheit mit einem elektrischen Energiespeicher gekoppelt sein, etwa mit einem in dem Batteriezellengehäuse angeordneten Kondensator. Das Vorsehen eines solchen separaten Energiespeichers macht das Bereitstellen der elektrischen Energie für die Steuereinheit von der elektrischen Energie unabhängig, welche das galvanische Element der Batteriezelle bereitstellt. So kann stets ein sicheres Schalten des Schaltelements und somit ein Unterbrechen des Stromflusses gewährleistet werden.

Insbesondere kann ein solcher elektrischer Energiespeicher beim Laden der Batteriezelle mitgeladen werden. Bei Verwendung einer eine Mehrzahl von Batteriezellen aufweisenden Batterie im Fahrzeug kann dies etwa während des sogenannten Rekuperationsbetriebs erfolgen. Der separate Energiespeicher kann jedoch auch nach einem Anschließen der Batterie an eine Stromquelle mitgeladen werden.

Schließlich hat es sich als vorteilhaft gezeigt, wenn die Steuereinheit dazu ausgebildet ist, eine Funktionstüchtigkeit des wenigstens einen Schaltelements zu überprüfen. Es kann also in die Steuereinheit eine Selbstdiagnosefunktion integriert sein, bei welcher etwa in vorgebbaren Zeitabständen das wenigstens eine Schaltelement überprüft wird. Hierfür können mittels der Steuereinheit Messungen am Schaltelement vorgenommen werden, welche über dessen Zustand Aufschluss geben.

Eine solche Eigendiagnose kann in vorgebbaren, programmierbaren Zeitintervallen vorgesehen oder extern angestoßen sein. Beispielsweise kann eine solche Abfrage des Status des Schaltelements oder von dessen Funktionstüchtigkeit von einer externen Steuerungseinrichtung etwa in Form eines Mikroprozessors eines Batteriemanagementsystems angestoßen werden. So kann bei einem Fehler des Schaltelements für ein dauerhaftes Unterbrechen der elektrisch leitenden Verbindung gesorgt werden. Andererseits kann durch das Überprüfen des Schaltelements festgestellt werden, ob das Schaltelement zuverlässig in seinen einen Stromfluss nicht zulassenden, als die elektrisch leitende Verbindung unterbrechenden Schaltzustand überführt werden kann. Das Vorliegen eines fehlerhaften Schaltelements kann dann einer Bedienperson kommuniziert und das Schaltelement bei Bedarf ausgetauscht werden.

Die erfindungsgemäße Batterie umfasst eine Mehrzahl von erfindungsgemäßen Batteriezellen, welche in Reihe geschaltet und/oder parallel geschaltet sein können.

Das erfindungsgemäße Kraftfahrzeug umfasst zumindest eine erfindungsgemäße Batterie. Das Kraftfahrzeug kann beispielsweise als Personenkraftwagen, insbesondere als ein Elektrofahrzeug oder Hybridfahrzeug ausgebildet sein. Des Weiteren kann es sich bei dem Kraftfahrzeug auch um ein elektrisch betriebenes Motorrad oder um ein elektrisch betriebenes Fahrrad handeln.

Es ist des Weiteren möglich, die Batterie in einem stationären Energiespeichersystem vorzusehen. Darüber hinaus kann es vorgesehen sein, dass die Batterie, welche in einem Kraftfahrzeug bereitgestellt war, als sogenannte Second Life Batterie weiterverwendet wird, bei welcher also die Batterie einer anders gearteten Nutzung zugeführt wird. Insbesondere bei Second Life Anwendungen können nämlich die Anforderungen etwa an die Leistungsfähigkeit der Batteriezellen geringer sein als bei Verwendung der Batteriezellen für die Batterie des Kraftfahrzeugs.

Die für die erfindungsgemäße Batterie beschriebenen Vorteile und bevorzugten Ausführungsformen gelten auch für das erfindungsgemäße Kraftfahrzeug.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: schematisch und ausschnittsweise eine Batteriezelle mit einer Stromunterbrechungsvorrichtung gemäß dem Stand der Technik;
- Fig. 2: die Batteriezelle gemäß Fig. 1, jedoch mit ausgelöster Stromunterbrechungsvorrichtung; und
- Fig. 3: schematisch eine Batteriezelle mit elektronischer Stromunterbrechungsvorrichtung, bei welcher ein Halbleiter-Schaltelement von einer Steuereinheit angesteuert wird, um eine elektrisch leitende Verbindung zwischen einem Ableiter eines galvanischen Elements der Batteriezelle und einem der elektrischen Anschlüsse der Batteriezelle zu unterbrechen.

Zur Erläuterung der in Fig. 1 und Fig. 2 gezeigten Batteriezelle 10 gemäß dem Stand der Technik wird auf die Beschreibungseinleitung verwiesen.

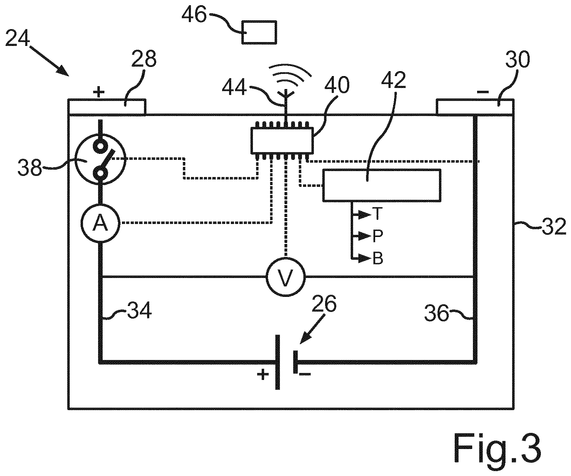

In Fig. 3 ist schematisch eine verbesserte Batteriezelle 24 gezeigt, welche ebenfalls eine Stromunterbrechungsvorrichtung aufweist. Die Batteriezelle 24 kann beispielsweise in einer Batterie eines Kraftfahrzeugs zum Einsatz kommen und etwa als Lithium-Ionen-Zelle ausgebildet sein. In einer Batterie, wie sie als Traktionsbatterie für ein Kraftfahrzeug zum Einsatz kommt, ist üblicherweise eine Vielzahl solcher Batteriezellen 24 elektrisch in Reihe und/oder parallel geschaltet, um entsprechend hohe Spannungen und Ströme bereitzustellen.

Im Betrieb der Batteriezelle 24 können nun Situationen auftreten, in welchen es vorteilhaft ist, wenn ein Stromfluss von einem galvanischen Element 26 der Batteriezelle 24 zu zumindest einem von zwei elektrischen Anschlüssen 28, 30 der Batteriezelle 24 unterbrochen ist. Dies kann mit der in Fig. 3 schematisch gezeigten, schaltbaren und intelligenten Batteriezelle 24 gewährleistet werden.

Die Batteriezelle 24 umfasst ein Batteriezellengehäuse 32, welches vorliegend beispielhaft prismatisch ausgebildet ist. Innerhalb des Batteriezellengehäuses 32 ist das galvanische Element 26 aufgenommen. Das galvanische Element 26 umfasst Ableiter 34, 36, welche mit dem jeweiligen elektrochemisch aktiven Material beschichtet sind. Zur Vereinfachung sind vorliegend lediglich der zu dem ersten elektrischen Anschluss 28 (etwa einem Pluspol) der Batteriezelle 24 führende Ableiter 34 und der zu dem zweiten elektrischen Anschluss 30 der Batteriezelle 24 führende Ableiter 36 gezeigt. Zwischen zumindest einem der Ableiter 34, 36 und einem der Anschlüsse 28, 30 ist ein Schaltelement 38 angeordnet, mittels welchem sich eine elektrisch leitende Verbindung unterbrechen lässt, indem das Schaltelement 38 geöffnet wird. Vorliegend ist das Schaltelement 38 beispielhaft in der elektrisch leitenden Verbindung zwischen dem Ableiter 34 des galvanischen Elements 26 und dem den Pluspol bildenden Anschluss 28 der Batteriezelle 24 angeordnet. In alternativen Ausführungsformen kann jedoch auch durch Vorsehen eines solchen Schaltelements 38 der Ableiter 36 vom elektrischen Anschluss 30 getrennt werden.

Zum Ansteuern des Schaltelements 38, welches beispielsweise als Halbleiterelement ausgebildet ist, ist vorliegend eine Steuereinheit 40 vorgesehen, welche innerhalb des Batteriezellengehäuses 32 angeordnet ist. Je nach Auslegung des Schaltelements 38 kann die Steuereinheit 40 dafür sorgen, dass bei an dem Schaltelement 38 anliegender Steuerspannung die elektrisch leitende Verbindung zwischen dem Ableiter 34 und dem Anschluss 28 unterbrochen oder hergestellt ist. Durch das Zusammenspiel des Schaltelements 38 mit der Steuereinheit 40 ist eine elektronische Stromunterbrechungsvorrichtung bereitgestellt, indem eine intelligente Ansteuerung für das Halbleiterelement vorgesehen ist.

Dies ermöglicht es insbesondere, eine exakte Auslösung zu programmieren, also Parameter vorzugeben, welche bei der Entscheidung berücksichtigt werden, ob die Steuereinheit 40 ein Öffnen des Schaltelements 38 bewirken soll.

Hierfür ist die Steuereinheit 40 vorliegend mit Sensoren 42 gekoppelt, welche eine Vielzahl von Parametern erfassen können. Vorliegend sind schematisch Sensoren 42 gezeigt, welche innerhalb des Batteriezellengehäuses 32 angeordnet sind und somit entsprechende Parameter innerhalb des Batteriezellengehäuses 32 erfassen. Diese Parameter können beispielsweise eine Temperatur, einen Druck, Beschleunigungen, (etwa mittels eines Kraftsensors erfassbare) mechanische Spannungen oder die Zusammensetzung eines Elektrolyten des galvanischen Elements 26 umfassen. Die Steuereinheit 40 selber ist des Weiteren in der Lage, einen Stromfluss durch die Batteriezelle 24 sowie die an den Ableitern 34, 36 anliegende Spannung zu erfassen. Anhand der Sensordaten sowie der mittels der Steuereinheit 40 direkt erfassten Messwerte kann eine Vielzahl von Auslösekriterien berücksichtigt werden, um das Schaltelement 38 in einen offenen Schaltzustand zu überführen, in welchem die elektrisch leitende Verbindung zwischen dem Ableiter 34 und dem elektrischen Anschluss 28 unterbrochen ist.

Zusätzlich oder alternativ können (nicht gezeigte) Sensoren entsprechende Parameter erfassen, welche außerhalb des Batteriezellengehäuses 32 vorliegen, etwa eine Temperatur, Beschleunigungen sowie insbesondere Werte der Stromstärke und der Spannung. Auch diese Messwerte können beim Festlegen der Auslösekriterien berücksichtigt werden.

Durch das Vorsehen der Steuereinheit 40 können darüber hinaus über die Lebensdauer der Batteriezelle 24 hinweg die Auslösekriterien dynamisch angepasst und modifiziert werden. Hierfür kann die Steuereinheit 40 eine Schnittstelle 44 aufweisen, welche ein entsprechendes Umprogrammieren der Steuereinheit 40 zulässt.

Aufgrund des Vorsehens der Steuereinheit 40, welche das Schaltelement 38 ansteuert, ist des Weiteren eine Mehrfachauslösung des Schaltelements 38 sowie eine reversible Reaktivierung des Schaltelements 38 möglich. Das Halbleiterbauelement kann nämlich wieder in den Schaltzustand überführt werden, in welchem die elektrisch leitende Verbindung zwischen dem Ableiter 34 und dem Anschluss 28 hergestellt ist.

Über die Schnittstelle 44 kann die Steuereinheit 40 des Weiteren Informationen an eine übergeordnete Steuerungseinrichtung 46 der Batterie übermitteln, welche beispielsweise als Batteriemanagementsystem ausgebildet sein kann. Von der übergeordneten Steuerungseinrichtung 46 können darüber hinaus Befehle an die Steuereinheit 40 übermittelt werden. Eine solche Vernetzung mehrerer Batteriezellen 24 und ein Datenaustausch untereinander ermöglicht es insbesondere, eine Mehrzahl von beteiligten Batteriezellen 24 etwa aus Sicherheitsgründen zu deaktivieren.

Insbesondere bei einer Entwicklung einer neuen Generation der Batteriezellen 24 oder bei Modifikationen an bestehenden Batteriezellen 24 können durch einfache Programmierung der Steuereinheit 40 die Auslösekriterien an neue Gegebenheiten angepasst werden. Dies kann etwa beim Herstellen der Batteriezelle 24 erfolgen oder auch in einem Betrieb, welcher die Batteriezellen 24 zum Fertigen der Batterie, insbesondere der Batterie des Kraftfahrzeugs, nutzt. Auch kann im Rahmen einer Wartung einer die Batteriezellen 24 umfassenden Batterie ein solches Update der Auslösekriterien vorgenommen werden.

Des Weiteren bringt es Kostenvorteile mit sich, wenn als das wenigstens eine Schaltelement 38 eine für unterschiedliche Typen von Batteriezellen 24 einheitliche elektronischen Komponente zum Einsatz kommt, deren Auslöseverhalten auf den Typ der Batteriezelle 24 abgestimmt programmiert werden kann.

## Patentansprüche

1. Batterie für ein Kraftfahrzeug, mit einer Mehrzahl von in Reihe und/oder parallel geschalteten Batteriezellen (24), wobei die jeweilige Batteriezelle (24) der Batterie ein Batteriezellengehäuse (32) aufweist, in welchem ein galvanisches Element (26) aufgenommen ist, und zwei elektrische Anschlüsse (28, 30), über welche die Batteriezelle (24) mit wenigstens einer weiteren Batteriezelle der Batterie elektrisch verbunden ist, **gekennzeichnet durch**
wenigstens ein Schaltelement (38), welches mittels einer innerhalb des Batteriezellengehäuses (32) angeordneten Steuereinheit (40) in einen Schaltzustand überführbar ist, in welchem eine elektrisch leitende Verbindung zwischen einem Ableiter (34) des galvanischen Elements (26) und zumindest einem der elektrischen Anschlüsse (28, 30) unterbrochen ist, wobei mittels der Steuereinheit (40) und/oder mittels zumindest eines mit der Steuereinheit (40) gekoppelten Sensors (42) wenigstens ein Parameter aus einer Gruppe erfassbar ist, welche
- eine Stromstärke eines durch die Batteriezelle (24) fließenden Stroms und/oder
- eine Temperatur und/oder
- eine Spannung und/oder
- einen Druck und/oder
- eine mechanische Spannung und/oder
- eine Beschaffenheit eines Elektrolyten des galvanischen Elements (26) und/oder
- eine Beschleunigung
umfasst, wobei die Steuereinheit (40) dazu ausgebildet ist, in Abhängigkeit von dem wenigstens einen Parameter das wenigstens eine Schaltelement (38) in den Schaltzustand zu überführen, in welchem die elektrisch leitende Verbindung zwischen dem Ableiter (34) des galvanischen Elements (26) und dem zumindest einen elektrischen Anschluss (28, 30) unterbrochen ist, wobei die Steuereinheit (40) eine Schnittstelle (44) aufweist, über welche ein Schwellenwert des wenigstens einen Parameters veränderbar ist, bei dessen Überschreiten das wenigstens eine Schaltelement (38) in den Schaltzustand überführt wird, wobei über die Schnittstelle (44) Auslösekriterien durch Modifizieren von Kennlinien oder Kennlinienfeldern anpassbar sind, welche in einem Speicherbaustein der Steuereinheit (40) abgelegt sein.

2. Batterie nach Anspruch 1,
**dadurch gekennzeichnet, dass**
das wenigstens eine Schaltelement (38) als Halbleiterelement ausgebildet ist.

3. Batterie nach einem der Ansprüche 1 bis 2,
**dadurch gekennzeichnet, dass**
die Steuereinheit (40) zum Übermitteln von Informationen an eine übergeordnete Steuerungseinrichtung (46) der Batterie und/oder zum Empfangen eines von der übergeordneten Steuerungseinrichtung (46) ausgegebenen Befehls ausgelegt ist.

4. Batterie nach einem der Ansprüche 1 bis 3,
**dadurch gekennzeichnet, dass**
zum Versorgen der Steuereinheit (40) mit elektrischer Energie die Steuereinheit (40) mit dem galvanischen Element (26) und/oder mit einem elektrischen Energiespeicher, insbesondere mit einem Kondensator, gekoppelt ist.

5. Batterie nach einem der Ansprüche 1 bis 4,
**dadurch gekennzeichnet, dass**
die Steuereinheit (40) dazu ausgebildet ist, eine Funktionstüchtigkeit des wenigstens einen Schaltelements (38) zu überprüfen.

6. Kraftfahrzeug mit zumindest einer Batterie nach einem der Ansprüche 1 bis 5.

## Claims

1. Battery cell for a motor vehicle, having a plurality of battery cells (24) connected in series and/or in parallel, wherein the respective battery cell (24) of the battery has a battery cell housing (32) in which a galvanic element (26) is accommodated, and two electrical terminals (28, 30) by which the battery cell (24) is electrically connected to at least one further battery cell of the battery,
**characterised by**
at least one switching element (38) which can be changed by means of a controller (40) arranged inside the battery cell housing (32) to a switching state in which an electrically conductive connection between an arrester (34) of the galvanic element (26) and at least one of the electrical terminals (28, 30) is interrupted, wherein by the controller (40) and/or by at least one sensor (42) coupled to the controller (40) at least one parameter from a group can be detected, which group comprises
- a current intensity of a current flowing through the battery cell (24) and/or
- a temperature and/or
- a voltage and/or
- a pressure and/or
- a mechanical stress and/or
- a condition of an electrolyte of the galvanic element (26) and/or
- an acceleration,
wherein the controller (40) is designed, depending on the at least one parameter, to change the at least one switching element (38) to the switching state in which the electrically conductive connection between the arrester (34) of the galvanic element (26) and the at least one electrical terminal (28, 30) is interrupted, wherein the controller (40) has an interface (44) which can be used to modify a threshold value of the at least one parameter, such that when the threshold value is exceeded, the at least one switching element (38) is changed to the switching state, wherein triggering criteria can be adjusted via the interface (44) by modifying characteristic curves or characteristic curve fields which are stored in a memory module of the controller (40).

2. Battery according to claim 1,
**characterised in that**
the at least one switching element (38) is designed as a semiconductor element.

3. Battery according to any one of claims 1 to 2,
**characterised in that**
the controller (40) is configured to transmit information to a superordinate control apparatus (46) of the battery and/or to receive an instruction issued by the superordinate control apparatus (46).

4. Battery according to any one of claims 1 to 3,
**characterised in that**
in order to supply the controller (40) with electric energy, the controller (40) is coupled to the galvanic element (26) and/or to an electric energy storage device, in particular a capacitor.

5. Battery according to any one of claims 1 to 4,
**characterised in that**
the controller (40) is designed to check the functionality of the at least one switching element (38).

6. Motor vehicle having at least one battery according to any one of claims 1 to 5.

## Revendications

1. Batterie destinée à un véhicule automobile, avec une pluralité de cellules de batterie (24) montées en série et/ou en parallèle, dans laquelle les cellules de batterie (24) respectives de la batterie présente un boîtier de cellules de batterie (32), dans lequel est logé un élément galvanique (26), et deux raccordements électriques (28, 30), sur lesquels la cellule de batterie (24) est reliée électriquement avec au moins une autre cellule de batterie de la batterie,
**caractérisée par**
au moins un élément de commutation (38), lequel peut être transféré au moyen d'une unité de commande (40) disposée dans le boîtier de cellules de batterie (32) dans un état de commutation, dans lequel une liaison électroconductrice est interrompue entre un élément de déviation (34) de l'élément galvanique (26) et au moins l'une des bornes électriques (28, 30), dans laquelle au moins un paramètre peut être détecté à partir d'un groupe au moyen de l'unité de commande (40) et/ou au moyen d'au moins un capteur (42) couplé à l'unité de commande (40), lequel
- comprend une intensité de courant d'un courant circulant à travers la cellule de batterie (24) et/ou
- une température et/ou
- une tension et/ou
- une pression et/ou
- une tension mécanique et/ou
- une composition d'un électrolyte de l'élément galvanique (26) et/ou
- une accélération,
dans laquelle l'unité de commande (40) est conçue pour transférer l'au moins un élément de commutation (38) à l'état de commutation en fonction de l'au moins un paramètre, dans lequel la liaison électroconductrice est interrompue entre l'élément de déviation (34) de l'élément galvanique (26) et l'au moins un raccordement électrique (28, 30), dans laquelle l'unité de commande (40) présente une interface (44), sur laquelle un seuil de l'au moins un paramètre peut être modifié, lors de son dépassement, l'au moins un élément de commutation (38) est transféré à l'état de commutation, dans laquelle des critères de déclenchement peuvent être ajustés sur l'interface (44) en modifiant les courbes caractéristiques ou les champs des courbes caractéristiques, lesquelles(lesquels) sont stocké(e)s dans une mémoire de l'unité de commande (40).

2. Batterie selon la revendication 1,
**caractérisée en ce que**
l'au moins un élément de commutation (38) est conçu comme un élément semiconducteur.

3. Batterie selon l'une quelconque des revendications 1 à 2,
**caractérisée en ce que**
l'unité de commande (40) est adaptée pour transmettre des informations à un dispositif de commande de niveau supérieur (46) de la batterie et/ou pour recevoir une instruction émise par le dispositif de commande de niveau supérieur (46).

4. Batterie selon l'une quelconque des revendications 1 à 3,
**caractérisée en ce que**
pour alimenter l'unité de commande (40) avec de l'énergie électrique, l'unité de commande (40) est couplée à l'élément galvanique (26) et/ou à un accumulateur d'énergie électrique, en particulier à un condensateur.

5. Batterie selon l'une quelconque des revendications 1 à 4,
**caractérisée en ce que**
l'unité de commande (40) est conçue pour vérifier le bon fonctionnement de l'au moins un élément de commutation (38).

6. Véhicule automobile muni d'au moins une batterie selon l'une quelconque des revendications 1 à 5.
